# EUROPEAN PATENT SPECIFICATION

(11) **EP 2 062 428 B1**
(45) Date of publication and mention of the grant of the patent: **17.04.2013**
(21) Application number: 07807806.0
(22) Date of filing: 14.09.2007
(51) Int. Cl.: H04N 1/405, B41J 2/52, G06T 5/00

(54) **IMAGE PROCESSING APPARATUS, PROGRAM, IMAGE FORMING APPARATUS, IMAGE FORMING METHOD, AND DITHER MATRIX**
BILDVERARBEITUNGSVORRICHTUNG, PROGRAMM, BILDERZEUGUNGSVORRICHTUNG, BILDERZEUGUNGSVERFAHREN UND DITHERMATRIX
DISPOSITIF DE TRAITEMENT D'IMAGE, PROGRAMME, DISPOSITIF DE FORMATION D'IMAGE, PROCEDE DE FORMATION D'IMAGE ET MATRICE DE SUPERPOSITION

(30) Priority: 16.09.2006 JP 2006251949
(43) Date of publication of application: 27.05.2009
(73) Proprietor: Ricoh Company, Ltd., Tokyo 143-8555 (JP)
(72) Inventor: HIRANO, Masanori, Atsugi-shi Kanagawa 243-0203 (JP); IKE, Takahiro, Akishima-shi Tokyo 196-0032 (JP)
(74) Representative: Leeming, John Gerard
(86) International application number: PCT/JP2007/068484
(87) International publication number: WO 2008/032877

(56) References cited:
- EP-A2- 0 642 259
- EP-A2- 0 647 058
- JP-A- 01 218 173
- JP-A- 07 264 403
- JP-A- 2002 010 094
- JP-A- 2003 324 606

## Description

### TECHNICAL FIELD

The present invention relates to an image processing apparatus, a program, an image forming apparatus, an image forming method, and a dither matrix.

### BACKGROUND ART

Known image forming apparatuses such as printers, facsimile machines, copiers, and multi-function peripherals thereof convey a medium (hereinafter referred to as a "sheet," but it is not limited in material and used synonymously with a "medium to be recorded," a "recording medium," a "transfer material," a "recording paper," or the like) and have a recording liquid (hereinafter referred also to as "ink") as a liquid adhere to the sheet so as to perform an image forming operation ("recording," "printing," and "photographic printing" are also synonymously used), for example, using a liquid ejection apparatus including a recording head composed of liquid ejection heads that eject liquid droplets of the recording liquid (liquid).

Note that the image forming apparatuses refer to an apparatus that ejects a liquid onto a medium such as a paper, a thread, a fiber, a cloth, leather, metal, plastic, glass, a ceramic so as to perform an image forming operation. Furthermore, the "image forming" refers not only to an operation in which meaningful images such as characters and graphics are applied to a medium, but also to that in which meaningless images such as patterns are applied thereto. Furthermore, the liquid is not limited to a recording liquid or ink and not especially limited so long as it is available to perform an image forming operation. Furthermore, the liquid ejection apparatus refers to an apparatus that ejects a liquid from the liquid ejection head, and so it is not limited to an apparatus that form images.

Since such image forming apparatuses separately print only four types (four tones) of dots, for example, "no dots," "small dots, "medium dots," and "large dots" as the sizes of recording liquid droplets, they cannot express multiple tones with the dot sizes of recording liquid droplets. Accordingly, a dither method has been generally used as a method for reproducing halftones by combining an area density tone (intensity modulation) of a level lower than that of an original image and an area tone (area modulation).

The dither method (binary dither method) uses the value of each matrix in a dither matrix as a threshold, compares it with the density of a pixel of corresponding coordinates, determines whether to output "1" (printing or illumination) or "0" (no printing or no illumination) to thereby obtain a binarized image. With this method, only the comparison and calculation of the original image and the threshold makes it possible to obtain binarized data for an area tone and perform calculations at high speed.

Furthermore, the dither method uses not only a binary system but also a ternary or more (multi-valued) system. For example, when images are output by an ink jet recording apparatus that can control the sizes of ink droplets at three levels of "small," "medium," or "large," three types of dither matrices are prepared to determine whether to output "0" (no printing), "1" (printing with small droplets), "2" (printing with medium droplets), or "3" (printing with large droplets) for each processing pixel.

Furthermore, although various methods for determining the threshold of a dither matrix have been proposed, Bayer dither, random dither, blue noise dither, or the like are widely known. The characteristic of these methods is that dots are not concentrated on a specific area in an area modulation and are arranged so as to be uniformly distributed, and they are classified into a dispersed type method. On the other hand, there is also a concentrated type method in which dots are arranged so as to be aggregated in a certain unit. As an example of the concentrated type method, there has been known one in which a dither matrix includes a sub-matrix so as to possess a screen angle.

As halftone processing with the dither method, Patent Document 1 describes a method in which plural threshold matrices (dither matrices) are prepared and one of the threshold matrices is randomly selected for every plural halftone image or for every random time interval so as to prevent the occurrence of moire (stripe pattern) in output images when dot images and dithered images are processed.
Patent Document 1: JP-A-57-119564

Patent Document 2 also describes an apparatus that includes a dither pattern generator for generating plural dither patterns and a random number generator for generating random numbers and selects a dither pattern depending on a random number.
Patent Document 2: JP-A-04-250769

Furthermore, an error diffusion method may also be used for pseudo-tone expression, but it is extremely complicated in processing compared with the dither method. According to this method, for example, threshold processing is performed for every pixel, and the error caused by the processing is maintained and reflected on the subsequent calculation at a predetermined ratio, thereby making it possible to feed back even information that would forcibly be discarded in dither processing to an output image and obtain an image of higher quality than a dithered image in terms of revolution or the like.

EP 0 642 259 discloses a frequency-modulation halftone screen utilizing local randomization of a deterministic screen. The deterministic screen optimizes uniformity of the halftone dot distribution, while local randomization suppresses artifacts due to subject moiré.

Meanwhile, in a multi-function peripheral including, for example, an image scanning apparatus and an image forming apparatus, input picture data are all scanned as image data in a copy mode in which the image scanning apparatus scans document images and then the image forming apparatus prints and outputs the images. Therefore, it is required to once separate image areas of the image data and apply correction processing to the separated image areas in accordance with each element (a character, a continuous tone, or a dot) of an input document, so as to obtain high-quality output images. Furthermore, also in the halftone processing in which input image data are converted into output dot patterns, error diffusion processing excellent in image reproducibility has been generally used.

However, it is required to use an image processing apparatus (image processing controller) having high calculation performance to separate image areas (image area separation) and perform correction processing in accordance with the image area separation at high speed. In addition, it is required to use an image processing apparatus (image processing controller) having high processing performance such as a capability of ensuring large amounts of buffers to maintain a quantization error as described above so as to perform the error diffusion processing in the halftone processing. As a result, costs for the entire unit will be greatly increased.

Therefore, the omission of image area separation and the application of the dither processing to the halftone processing enable high speed processing without the use of an image processing controller having high image processing performance.

On the other hand, however, the simplification of the image processing will cause the occurrence of the so-called moire. The moire is caused by synchronism/asynchronism between a document dot component and a dither mask pattern (dither matrix) in such a manner that partially lacking pixels appear on an output image as if they are patterns, resulting in a remarkable reduction in image quality. Furthermore, the lack of dots will also cause a reduction in image density itself.

Therefore, as described in Patent Documents 1 and 2, several threshold matrices (dither matrices) are randomly selected for every plural halftone image of halftone images or for every random time interval to perform the halftone processing so as to prevent the occurrence of moire (stripe pattern). With this configuration, however, it is required to prepare plural types of dither matrices and randomly select the same, thereby causing a low processing speed and a complicated configuration.

The present invention is made in view of the above problems and may provide an image processing apparatus, a program, an image forming apparatus, an image forming method, and a dither matrix capable of enhancing output image quality by suppressing the occurrence of moire without reducing the processing speed.

In order to solve the above problems, the present invention provides an image processing apparatus as specified in the claims.

According to the configuration of the present invention, the dither matrix is an organized dither matrix composed of main matrices having dispersibility and sub-matrices having randomness. In this case, the main matrix having dispersibility may be a Bayer matrix. Furthermore, a threshold is assigned to the sub-matrix based on a generation rate by a circumferentially assigned threshold in accordance with tone density, and the halftone processing is performed using the dither matrix when input data contain a dot image and the halftone processing is performed using a different dither matrix when the input data do not contain a dot image.

Furthermore, the present invention provides a program that causes a computer to perform halftone processing as specified in the claims.

Furthermore, the present invention provides an image forming apparatus as specified in the claims.

Furthermore, the present invention provides an image forming method as specified in the claims.

According to the image processing apparatus, the program, the image forming apparatus, and the image forming method of the embodiment of the present invention, halftone processing is performed using a dither matrix where the intensity of a frequency characteristic of an output image relatively increases from a low frequency component, through an intermediate frequency component, to a high frequency component, thereby making it possible to enhance output image quality by suppressing the occurrence of moire without reducing processing speed. Furthermore, according to the dither matrix of the embodiment of the present invention, the intensity of a frequency characteristic of an output image relatively increases from a low frequency component, through an intermediate frequency component, to a high frequency component, thereby making it possible to perform halftone processing capable of suppressing the occurrence of moire without reducing processing speed.

### BRIEF DESCRIPTION OF THE DRAWINGS

FIG. 1 is a side view for explaining an entire configuration of a mechanical section of an image forming apparatus according to an embodiment of the present invention, which includes an image processing apparatus of the embodiment of the present invention, a program thereof, and a dither matrix thereof and forms images with an image forming method thereof;
FIG.2 is a plan view of the mechanical section at its essential part;
FIG. 3 is an enlarged front view of the image forming apparatus at its essential part;
FIG. 4 is a block diagram showing an outline of a control section of the image forming apparatus;
FIG. 5 is an explanatory drawing for explaining a flow of image processing in a general copy mode;
FIGS. 6A through 6C are explanatory drawings for explaining dither processing;
FIGS. 7A and 7B are explanatory drawings for explaining the occurrence of moire where a dot image matches the basic tone of a dither matrix;
FIGS. 8A through 8D are explanatory drawings for explaining the frequency characteristic of the dither matrix according to the embodiment of the present invention in different tone levels;
FIG. 9 is an explanatory drawing for explaining the dither matrix having the blue noise characteristic;
FIG. 10 is an explanatory drawing for explaining the frequency characteristic of a dot image;
FIGS. 11A and 11B are explanatory drawings for explaining the output image results of dot images when halftone processing is performed using the dither matrix according to the embodiment of the present invention;
FIGS. 12A and 12B are explanatory drawings for explaining the characteristic of a general dot image;
FIGS. 13A through 13C are explanatory drawings for explaining an example of a configuration of the dither matrix according to the embodiment of the present invention;
FIGS. 14A through 14C are explanatory drawings for explaining the threshold arrangement of a sub-matrix of the dither matrix according to the embodiment of the present invention;
FIGS. 15A and 15B are explanatory drawings for explaining an example when a dither matrix is rotated to be used;
FIGS. 16A and 16B are explanatory drawings for explaining a case where a dither matrix is respectively arranged in a forward order and a reverse order to be used;
FIGS. 17A through 17D are explanatory drawings for explaining a multi-valued dither matrix;
FIG. 18 is an explanatory drawing for explaining a head in which nozzle arrays are asymmetrically arranged;
FIG. 19 is an explanatory drawing for explaining an example of a head in which nozzle arrays are symmetrically arranged;
FIG. 20 is an explanatory drawing for explaining another example of a head in which nozzle arrays are symmetrically arranged;
FIG. 21 is an explanatory drawing for explaining still another example of a head in which nozzle arrays are symmetrically arranged; and
FIG. 22 is a flow chart for explaining an example in which halftone processing is switched in accordance with a mode.

### BEST MODE FOR CARRYING OUT THE INVENTION

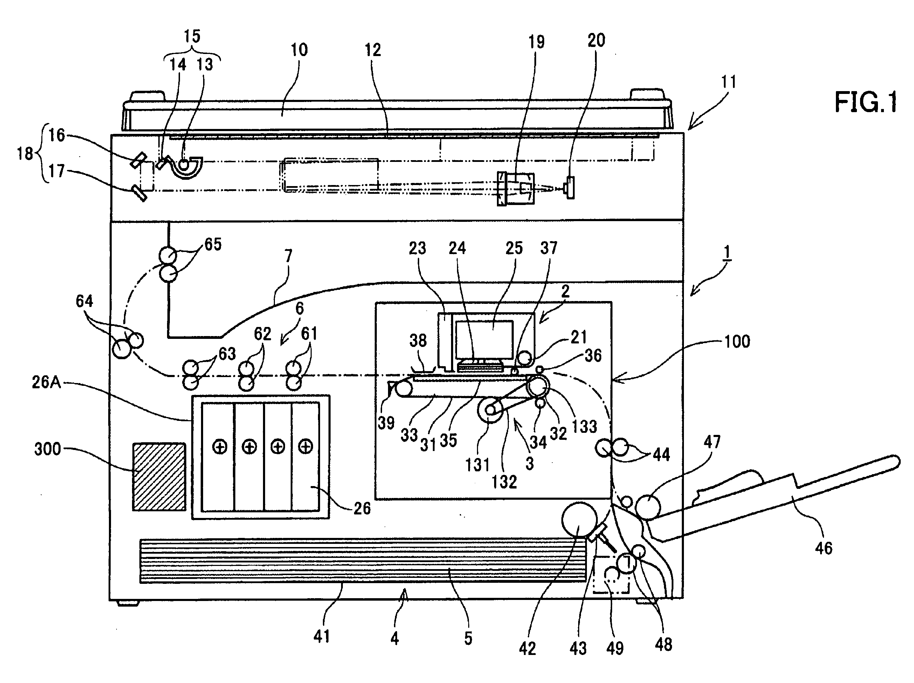

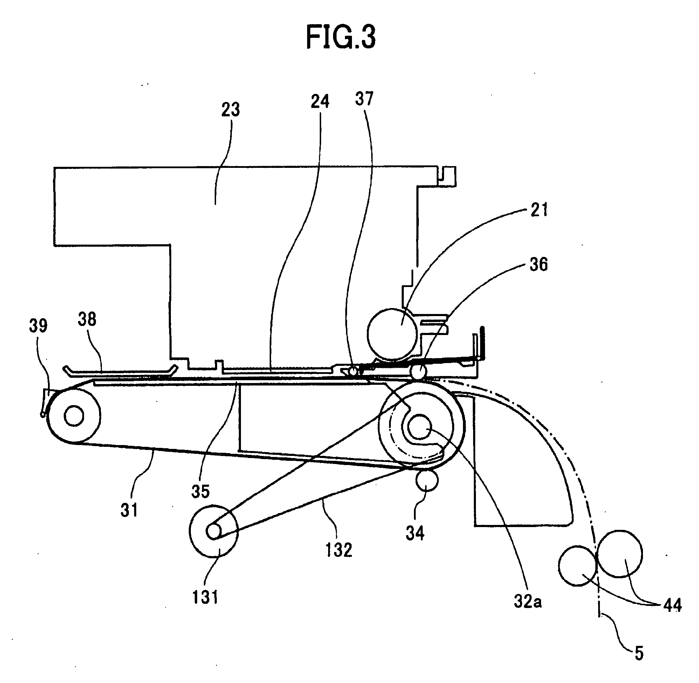

Next, referring to the accompanying drawings, a description is made of an embodiment of the present invention. FIGS. 1 through 3 describe an example of an image forming apparatus according to the embodiment of the present invention. Note that FIGS. 1, 2, and 3 are a schematic view showing an entire configuration of the image forming apparatus, a plan view of the engine unit section thereof, and an enlarged front view of the engine unit section thereof, respectively.

The image forming apparatus includes an image forming section (means) 2 that forms images, a sub-scanning conveying section (means) 3, and the like inside (in the housing of) an apparatus main body 1. In the image forming apparatus, a medium to be recorded (hereinafter referred to as a "sheet," but the material of it is not limited to a paper) 5 as a member to be conveyed is individually separated and fed from a sheet feeding section (means) 4 as storage means provided at the bottom of the apparatus main body 1. Then, after the image forming section 2 ejects liquid droplets onto the sheet 5 to form (record) desired images thereon as the sheet 5 is intermittently conveyed at the position opposing the image forming section 2 by the sub-scanning conveying section 3, the sheet 5 is discharged to a sheet discharging tray 7 formed at the upper surface of the apparatus main body 1 through a discharge conveying section 6. Note that the image forming section 2 and the sub-scanning conveying section 3 are unitized to be an engine unit 100 and detachably attached to the apparatus main body 1.

Furthermore, the image forming apparatus further includes, as an input system for image data (print data) formed in the image forming section 2, an image scanning section (scanner section) 11 placed at the upper part of the apparatus main body 1, i.e., above the sheet discharging tray 7 to scan images. In the image scanning section 11, a scanning optical system 15 including an illumination source 13 and a mirror 14 and a scanning optical system 18 including mirrors 16 and 17 are moved to scan a document image placed on a contact glass 12, and the scanned image of the document is read as an image signal by an image scanning element 20 arranged in a rearward position of a lens 19. The read image signal is digitized and subjected to image processing, thus allowing the print data subjected to the image processing to be printed. Note that a pressure plate 10 is provided on the contact glass to press a document.

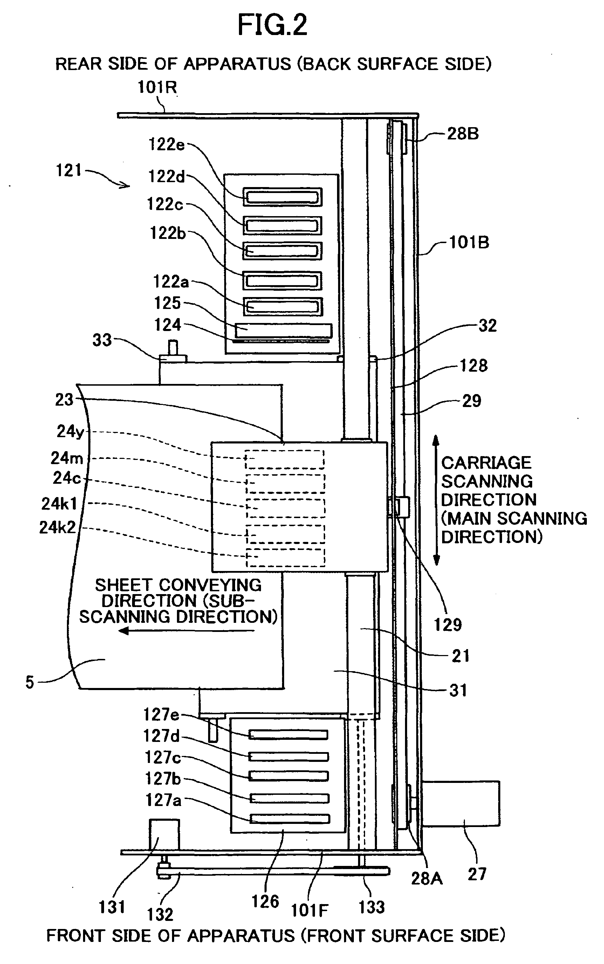

As shown in FIG. 2, in the image forming section 2 of the image forming apparatus, a carriage 23 is movably held in the main scanning direction by a carriage guide (guide rod) 21 laterally provided between a front plate 101F and a rear plate 101R and a guide stay (not shown) provided in a rear stay 101B and is moved to scan in the main scanning direction by a main scanning motor 27 through a timing belt 29 suspended between a drive pulley 28A and a driven pulley 28B.

The carriage 23 has totally five liquid droplet ejection heads mounted thereon including recording heads 24k1 and 24k2 of two liquid droplet ejection heads both of which eject black (K) ink and recording heads 24c, 24m, and 24y (referred to as a "recording head 24" when colors are not differentiated from each other or when the recording heads are given a numeric name) of liquid droplet ejection heads which eject cyan (C) ink, magenta (M) ink, and yellow (Y) ink, respectively. The image forming apparatus is of a shuttle-type which moves the carriage 23 in the main scanning direction and causes liquid droplets to be ejected from the recording heads 24 to form images as the sheet 5 is fed in the sheet conveying direction (sub-scanning direction) by the sub-scanning conveying section 3.

Furthermore, the carriage 23 has a sub-tank 25 mounted thereon to supply required colors of recording liquid to the respective recording heads 24. On the other hand, as shown in FIG. 1, respective colors of ink cartridges 26 as recording liquid cartridges storing black (K), cyan (C) ink, magenta (M) ink, and yellow (Y) ink, respectively, can be detachably loaded into a cartridge loading section 26A from the front side of the apparatus main body 1, and ink (recording liquid) is supplied from the respective colors of ink cartridges 26 to replenish the respective colors of sub-tanks 25 through a tube (not shown). Note that the black ink is configured to be supplied from the one ink cartridge 26 to the two sub-tanks 25.

Examples of the recording heads 24 include the so-called piezoelectric type in which a piezoelectric element as a pressure generator (actuating means) that increases the pressure of ink in an ink channel (pressure generating chamber) is used to deform a vibration plate forming the wall surface of the ink channel to change the volume of the ink channel, thereby ejecting ink droplets. Furthermore, the so-called thermal type can also be used in which the pressure generated by heating ink in an ink channel with a heating element to produce air bubbles is used to eject ink droplets. Furthermore, an electrostatic type can also be used in which an electrostatic force generated between a vibrating plate and an electrode is used to deform the vibrating plate where the vibrating plate forming the wall surface of an ink channel and the electrode are arranged to oppose each other to change the volume of the ink channel, thereby ejecting ink droplets.

Furthermore, as shown in FIG. 2, a linear scale 128 having slits is extended between the front and rear plates 101F and 101R along the scanning direction of the carriage 23, and an encoder sensor 129 composed of a transmission-type photosensor that detects the slits formed in the linear scale 128 is provided in the carriage 23. The linear scale 128 and the encoder sensor 129 constitute a linear encoder sensor that detects the movement of the carriage 23.

Furthermore, as shown in FIG. 2, a maintenance and recovery mechanism (apparatus) 121 that maintains and recovers the state of the nozzles of the recording heads 24 is arranged in a non-printing area on one side in the scanning direction of the carriage 23. The maintenance and recovery mechanism 121 includes one suction cap 122a serving also as a moisturizing item and four moisturizing caps 122b through 122e as cap members for capping respective nozzle surfaces 24a of the five recording heads 24, a wiper blade 124 as a wiping member for wiping off the nozzle surfaces 24a of the recording heads 24, and an idle ejection receiver 125 for idle ejection.

Furthermore, an idle ejection receiver 126 for idle ejection is arranged in a non-printing area on the other side in the scanning direction of the carriage 23. The idle ejection receiver 126 has openings 127a through 127e formed therein.

The sub-scanning conveying section 3 includes an endless conveying belt 31 bridged between a conveying roller 32 as a drive roller and a driven roller 33 as a tension roller to change the conveying direction of the sheet 5 fed from the lower side of the apparatus main body 1 by approximately 90 degrees so as to convey the sheet 5 in the direction opposing the image forming section 2; a charging roller 34 as charging means to which AC bias voltage as alternating voltage is applied to charge the front surface of the conveying belt 31; a platen guide member 35 that guides the conveying belt 31 at the area opposing the image forming section 2; a first pressure roller (entrance pressure roller) 36 that presses the sheet 5 against the conveying belt 31 at the position opposing the conveying roller 32; a second pressure roller (tip-end pressure roller) 37 that presses the sheet 5 against the conveying belt 31 at the position opposing the platen guide member 35 between the conveying roller 32 and the recording head 24 as image forming means; a pressing guide member 38 that presses the sheet 5 where images are formed by the image forming section 2; and a separating claw 39 that separates the sheet 5 where images are formed by the image forming section 2 from the conveying belt 31.

The conveying belt 31 of the sub-scanning conveying section 3 is configured to rotate in the sheet conveying direction (sub-scanning direction) of FIG. 2 in such a manner that the conveying roller 32 is rotated by a sub-scanning motor 131 through a timing belt 132 and a timing roller 133.

The sheet feeding section 4 includes a sheet feeding cassette 41 that can be inserted in and extracted from the apparatus main body 1 and serves as storage means that stores a multiplicity of the sheets 5 in a stacked manner, a sheet feeding roller 42 and a friction pad 43 that individually separate and feed the sheet 5 of the sheet feeding cassette 41, and a pair of resist rollers 44 that resist the fed sheet 5.

Furthermore, the sheet feeding section 4 includes a manual feeding tray 46 that stores a multiplicity of the sheets 5 in a stacked manner, a manual feeding roller 47 used to individually feed the sheet 5 from the manual feeding tray 46, and a vertically conveying roller 48 used to convey the sheet 5 fed from a sheet feeding cassette or a double-sided unit that is optionally attached on the bottom side of the apparatus main body 1. Such members as the sheet feeding roller 42, the resist rollers 44, the manual feeding roller 47, and the vertically conveying roller 48, which are used to feed the sheet 5 to the sub-scanning conveying section 3, are driven to rotate by a sheet feeding motor (drive means) 49 composed of a HB stepping motor through an electromagnetic clutch (not shown).

The discharge conveying section 6 includes two pairs of discharge conveying rollers 61 and 62 that convey the sheet 5 where images are formed and a pair of discharge conveying rollers 63 and a pair of discharge rollers 64 used to discharge the sheet 5 to the sheet discharging tray 7.

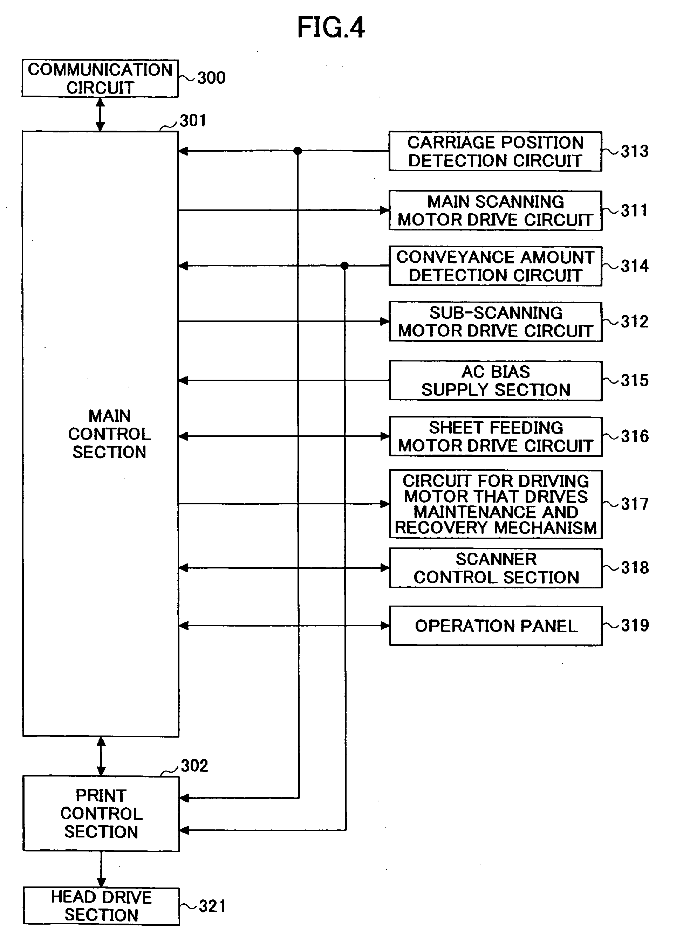

Referring next to a block diagram shown in FIG. 4, a description is made of the outline of the control section of the image forming apparatus.

The control section includes a main control section 301 composed of a microcomputer containing a CPU, a ROM, a RAM, a VRAM, an I/O and a print control section 302 composed of a microcomputer responsible for controlling a printing operation. The program according to the embodiment of the present invention is executed by the CPU stored in the ROM of the main control section 301.

The main control section 301 controls the driving of the main scanning motor 27 and the sub-scanning motor 131 through a main scanning motor drive circuit 311 and a sub-scanning motor drive circuit 312 to form images on the sheet 5 based on the information for print processing input from a communication circuit 300 and controls to output print data to the print control section 302.

Furthermore, the detection signal from a carriage position detection circuit 313 that detects the position of the carriage 23 is input to the main control section 301, and the main control section 301 controls the movement position and the movement speed of the carriage 23 based on the detection signal. The carriage position detection circuit 313 reads the number of slits of the linear scale (encoder sheet) 128 arranged in the scanning direction of the carriage 23 by using the photosensor (encoder sheet) 129 mounted on the carriage 23 and performs calculations to detect the position of the carriage 23. The main scanning motor drive circuit 311 drives the main scanning motor 27 to rotate in accordance with an output value based on the carriage movement amount input from the main control section 301, e.g., a PWM output value for performing PWM control so as to move the carriage 23 to a prescribed position at a prescribed speed.

Furthermore, the detection signal from a conveyance amount detection circuit 314 that detects the movement amount of the conveying belt 31 is input to the main control section 301, and the main control section 301 controls the movement amount and the movement speed of the conveying belt 31 based on the detection signal. The conveyance amount detection circuit 314 reads the number of slits of an encoder wheel attached to the rotary shaft of the conveying roller 32 by using the photosensor (encoder sensor) and performs calculations to detect a conveyance amount. The sub-scanning motor drive circuit 312 drives the sub-scanning motor 131 to rotate in accordance with the conveyance amount input from the main scanning section 301, so that the conveying roller 32 is driven to rotate to move the conveying belt 31 to a prescribed position at a prescribed speed.

Furthermore, the main control section 301 applies an AC bias to the charging roller 34 through an AC bias supply section 315 so that the conveying belt 31 is controlled to be charged. The main control section 301 drives the sheet feeding motor 49 to rotate through a sheet feeding motor drive circuit 316. The main control section 301 drives the motor (not shown) of the maintenance and recovery mechanism 121 to rotate through a circuit 317 for driving the motor that drives the maintenance and recovery mechanism so as to move the caps 122 and the wiper blade 124 up and down and drive a suction pump (not shown).

Furthermore, the main control section 301 controls the image scanning section 11 through a scanner control section 318. The main control section 301 outputs required display information to an operations panel 319 and takes input key information therefrom.

The print control section 302 generates data for driving the pressure generator that ejects liquid droplets from the recording heads 24 based on the signal from the main control section 301 as well as the carriage position and the conveyance amount from the carriage position detection circuit 313 and the conveyance amount detection circuit 314 so as to transfer the above image data to a head drive circuit 321 as serial data and outputs a transfer clock, a latch signal, an ink droplet control signal (mask signal), and the like necessary for transferring the image data and determining the transfer, to the head drive circuit 321. In addition, the print control section 302 includes a drive waveform generation section composed of a D/A converter by which pattern data of the drive signal stored in the ROM are D/A-converted, a voltage amplifier, a current amplifier, and the like and drive waveform selection means that selects a drive waveform to be supplied to the head driver, and generates a drive waveform constituted of either one drive pulse (drive signal) or plural drive pulses (drive signals) and outputs it/them to the head drive circuit 321.

Based on the serially-input image data corresponding to one line of the recording head 24, the head drive circuit 321 selectively applies the drive signal constituting the drive waveform supplied from the print control section 302 to a drive element (e.g., the piezoelectric element as described above) that generates energy for ejecting liquid droplets from the recording head 24 so as to drive the recording head 24. At this time, the head drive circuit 321 can separately eject different sizes of dots such as "large droplets (large dots)," "medium droplets (medium dots)," or "small droplets (small dots)" by selecting the drive pulse constituting the drive waveform.

The image forming apparatus having such a configuration detects the rotation amount of the conveying roller 32 that drives the conveying belt 31, controls the driving of the sub-scanning motor 131 in accordance with the detected rotation amount, and applies rectangular-wave high voltage of positive and negative poles as alternating voltage to the charging roller 34 from the AC bias supply section 315. Accordingly, positive and negative electric charges are alternately applied to the conveying belt 31 in the conveying direction thereof in a belt shape, so that the conveying belt 31 is charged in a prescribed charging width to generate a non-uniform electric field.

When the sheet 5 is fed from the sheet feeding section 4, delivered between the conveying roller 32 and the pressure roller 36, and placed on the conveying belt 31 where the positive and negative charges are formed to generate the non-uniform electric field, it is instantaneously polarized to follow the direction of the electric field, adhered onto the conveying belt 31 by an electrostatic attraction force, and conveyed along with the movement of the conveying belt 31.

As the sheet 5 is intermittently conveyed by the conveying belt 5, liquid droplets of a recording liquid are ejected onto the sheet 5 to record (print) images thereon. The sheet 5 where printing is performed is separated from the conveying belt 31 at its tip end by the separating claw 39 and delivered to the discharge conveying section 6 by the conveying roller 38.

Furthermore, during standby for performing a printing (recording) operation, the carriage 23 is moved to the side of the maintenance and recovery mechanism 121 where the nozzle surface of the recording head 24 is capped by the cap 122 to keep the nozzles moisturized, thereby preventing an ejection failure due to the drying of ink. Furthermore, a recording liquid is suctioned (this operation is called "nozzle suction" or "head suction") where the recording head 24 is capped by the suction and moisturizing cap 122a, to perform a recovery operation for discharging the recording liquid increased in viscosity or air bubbles. In the recovery operation, the wiper blade 124 is used to perform a wiping operation to clean and remove the ink adhering on the nozzle surface of the recording head 24. Furthermore, idle ejection is performed before the start of or in the middle of recording images in which the ink not used for the recording is ejected to the idle ejection receiver 125, thereby maintaining the stable ejection performance of the recording head 24.

Next, descriptions are made of an image processing apparatus of the embodiment of the present invention; a program thereof; halftone processing by the image forming method thereof; and a dither matrix thereof, in the image forming apparatus.

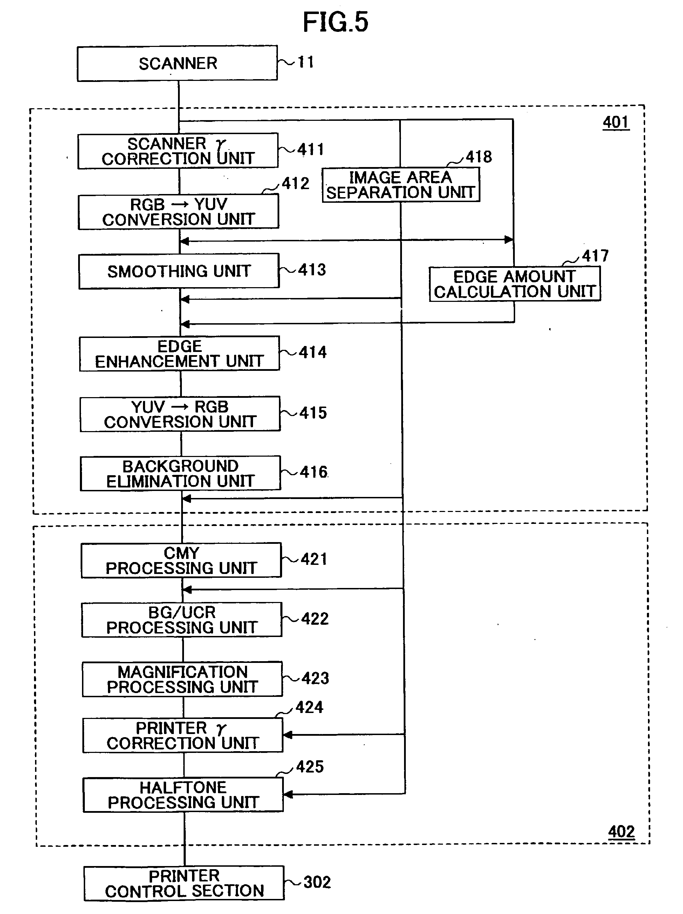

First, as shown in FIG. 5, in a general flow of image processing from the scanning of document images by an image scanning apparatus (scanner) up to the output thereof by an image forming apparatus (printer), the document image data scanned by the scanner 11 are subjected to a scanner γ correction unit 411, an RGB→YUV conversion unit 412, a smoothing unit 413, an edge enhancement unit 414, a YUV→RGB conversion unit 415, a background elimination unit 416, and an edge amount calculation unit 417 in an input correction section 401 so as to be corrected.

More specifically, although input image data are all read as "image" data when document images are copied and print-output, they may be read in a more deteriorated state than the document depending on the performance of the scanner, conditions (recording quality, stain, damage, surface gloss) of the input document, or the like. Accordingly, the input correction processing section 401 corrects the deteriorated data and enhances characteristics for each object, thereby aiming to improve the quality of images when the images are output.

If the input correction processing section 401 has processing capability, it causes an image area separation unit 418 to separate scanning image areas so as to scan characters and pictures in an optimal mode and makes each of the image areas corrected as described above. More specifically, when scanning the document where characters and pictures exist together, the image area separation unit 418 separates the areas of characters from those of pictures so that they are optimally processed, because dots may be crushed if the characters are given a higher priority while the characters may blur if the pictures are given a higher priority.

In an output processing section 402 to which the corrected image data output from the input correction processing section 401 are input, required processing is performed by a CMY processing unit 421 that converts the image data into a color space (RGB color system → CMY color system); a BG/UCR processing unit 422 that generates a black color and reduces an undercolor from the value of CMY; a magnification processing unit 423 that performs magnification processing in accordance with resolution; a printer γ correction unit 424 that performs input/output correction processing reflecting the characteristics of the apparatus and users' preferences; and a halftone processing unit 425 including a dither matrix that replaces image data with the pattern arrangement of dots ejected from the image forming apparatus. Although not shown in FIG. 5, the dot pattern data as print image data obtained in the halftone processing are divided into data for each scanning, rasterized to be developed into data in line with each nozzle position where recording is performed, and then output (printer output) to the print control section 302.

In the BG/UCR processing unit 422, the printer γ correction unit 424, and the halftone processing unit 425 of the output correction section 402, the processing is performed in accordance with the separation results by the image area separation unit 418.

By the way, the results of image area separation by the image area separation unit 418 will become important information in performing the above-described processing of the input correction processing section 401 and the output processing section 402. As a result, if the results of image area separation are wrong, the processing will be wrongly performed as it is, resulting in the occurrence of abnormal images. Therefore, the unit for image area separation is required to have high processing capability and performance.

Thus, high-speed and accurate image area separation largely depends on the performance of an image processing controller. If an image processing controller having insufficient processing capability is used, image area separation which makes use of pattern matching, frequency analysis, and the like will have an increased workload for calculation, resulting in a remarkable reduction in a throughput. On the other hand, however, the installation of an image processing controller having sufficient processing capability will increase costs of an image forming apparatus, an image forming apparatus, or the like.

Accordingly, the image forming apparatus aiming to reduce costs is configured to omit image area separation and use only minimum correction processing (such as weak smoothing and background elimination). Moreover, the apparatus is required to use the dither processing, not the error diffusion processing, as halftone processing also in the halftone processing unit 25 of the output processing section 402. The present invention pertains to the halftone processing unit 425.

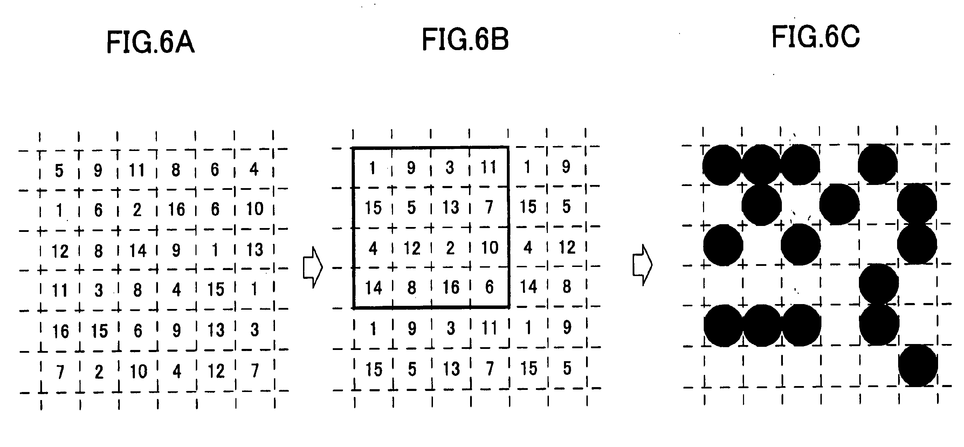

As shown in FIGS. 6A through 6C, the dither processing compares the input multi-level image data shown in FIG. 6A with the thresholds of the dither matrix shown in FIG. 6B and replaces them with the arrangement of the dot pattern shown in FIG. 6C. The dither processing is extremely light and uses only a small amount of memory for calculation, because the ON/OFF of dots is determined by paired comparison of a dither matrix and input data. In the error diffusion processing, on the other hand, it is required to perform calculation reflecting a peripheral quantization error so as to determine the ON/OFF of dots and ensure a memory for maintaining an error value even after the determination. In terms of image quality, the error diffusion processing is superior to the dither processing in resolution, image reproducibility, or the like, but it may not be used in some cases due to its heavy workload in calculation and memory cost.

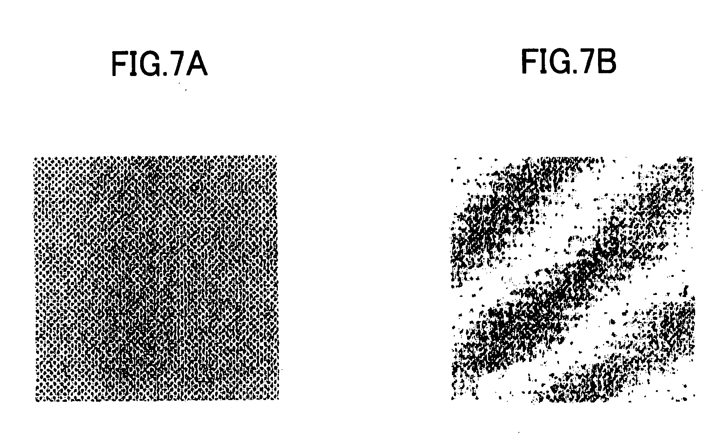

However, if the dither processing is used in the copy mode, the moire caused by interference with the dot pattern of a document will occur. More specifically, as shown in FIGS. 6A through 6C, even if data exist on a document image, dots will never be generated unless the data exceed the thresholds of the dither matrix. If data are regularly distributed as seen in a dot document, the lack of dots by the dither processing will adversely cause the regularity, which could possibly appear as moire. For example, if the dot document data shown in FIG. 7A are subjected to the dither processing by the dither matrix having the parallel line basic tone, the moire caused by interference with the parallel line basic tone will appear, as shown in FIG. 7B, on an output image as it is.

The dither processing can be classified into a concentrated type or a dispersed type depending on a dot generation method. However, moire is likely to occur particularly when the concentrated-type dither and a dot document are used in combination. This is because the concentrated-type dither concentrates dots in accordance with a specific arrangement. As a result, regularity is caused also in synchronism/asynchronism parts between the regularity of the concentrated-type dither and the dot periods of a document, which will be emphasized as moire.

Accordingly, the dither matrix according to the embodiment of the present invention has a configuration in which the frequency characteristic of an output image relatively increases from a low frequency component, through an intermediate frequency component, to a high frequency component in each tone level (from 0 to 255, 255 representing a solid image) so as to reduce the occurrence of moire and perform the dither processing suitable to the copy mode by which good reproducibility is obtained.

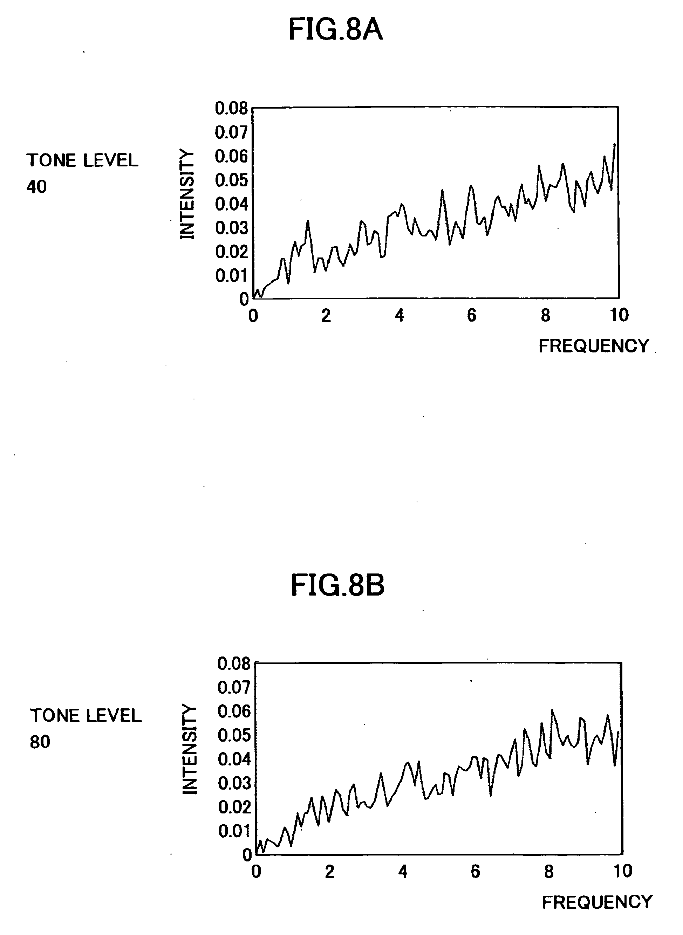

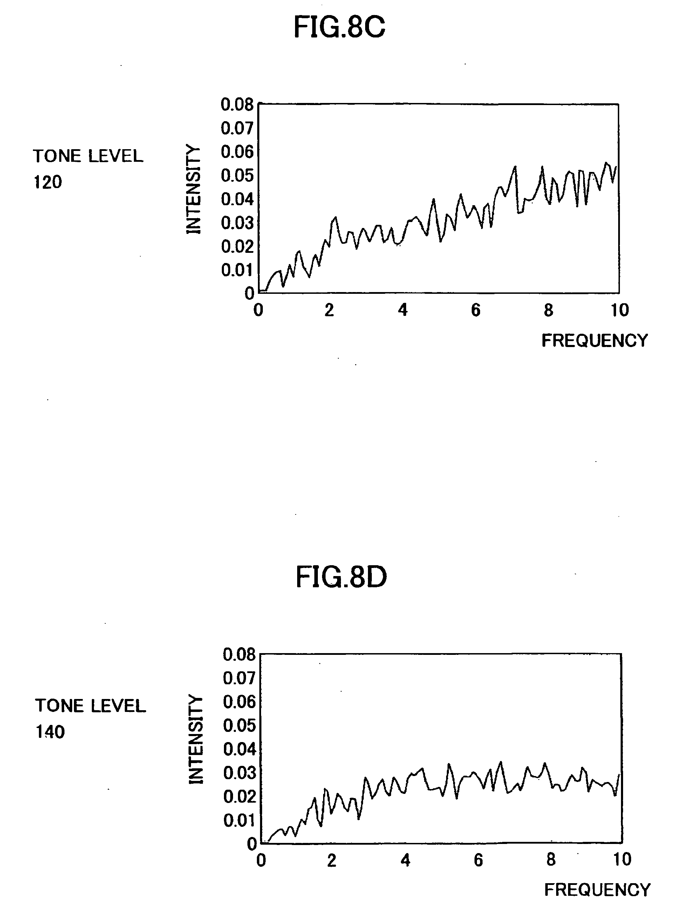

FIGS. 8A through 8D show the frequency characteristic of image data (arrangement pattern of dots) relating to tone levels of 40 (FIG. 8A), 80 (FIG. 8B), 120 (FIG. 8C), and 160 (FIG. 8D), respectively: a power spectrum (the square of an amplitude) is plotted to show frequency in the horizontal axis and the intensity of a frequency component in the vertical axis. As apparent from FIGS. 8A through 8D, the frequency characteristic of an output image subjected to the halftone processing by the dither matrix according to the embodiment of the present invention becomes a frequency characteristic in which the intensity of a frequency component relatively gently increases from a low frequency component, through an intermediate frequency component, to a high frequency component. Note that even if such a frequency characteristic is not seen in every tone level, the effect of the embodiment of the present invention can be obtained.

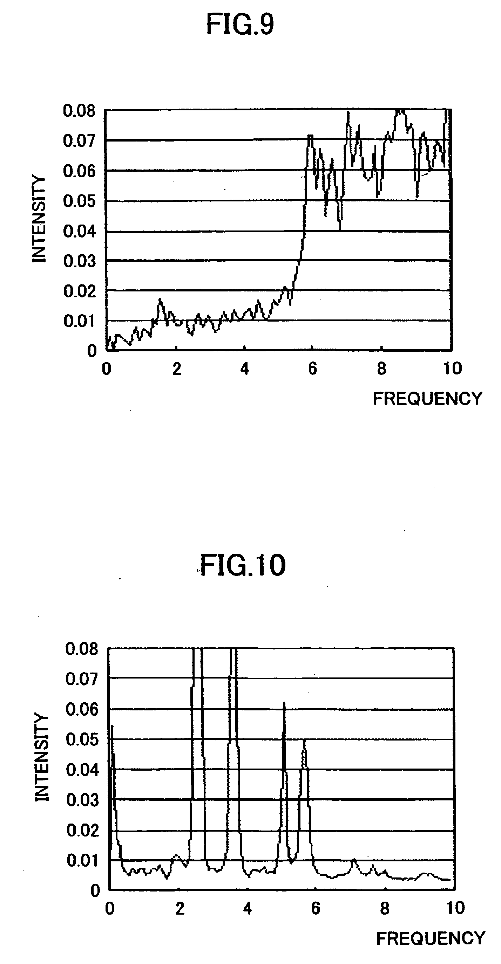

Such a frequency characteristic greatly differs from the dither matrix having the generally-known blue noise characteristic, i.e., the frequency characteristic of an output image in which the intensity of a frequency component is small at a low frequency component, but it rapidly increases at a high frequency component with a certain frequency component as a boundary as shown in FIG. 9.

More specifically, for example, in the frequency characteristic of a dot document (65 lines) where the prominent specific basic tone pattern is seen, peaks will be generated at the frequency bands corresponding to the period of the basic tone as shown in FIG. 10. As opposed to this, when the dither matrix having the blue noise characteristic as a representative dither matrix having an increased dispersibility is used, an output dot is likely to be easily assigned to a document dot position if the dither matrix has a frequency component (preferably an n-fold component: "n" is an integer of 1 or more) higher than the frequency characteristic of a dot document. However, if the frequency characteristic of the dither matrix is overconcentrated on the side of higher frequencies, the dither matrix will enhance its characteristic of uniformly assigning dots to a unit area. Accordingly, the density of dots for reproducing document dots existing as a cluster is reduced. As a result, the concentration of an output image will be reduced.

On the other hand, the dither matrix according to the embodiment of the present invention has a low frequency component in some degree (that corresponds to the so-called green noise characteristic when only the part ranging from a low frequency component to an intermediate frequency component is considered) as described above, thereby making it possible to ensure the reproducibility of the position of dots and the density thereof. More specifically, dots are caused to be somewhat concentrated while being dispersed, so that the area modulation characteristic of dots can also be reproduced.

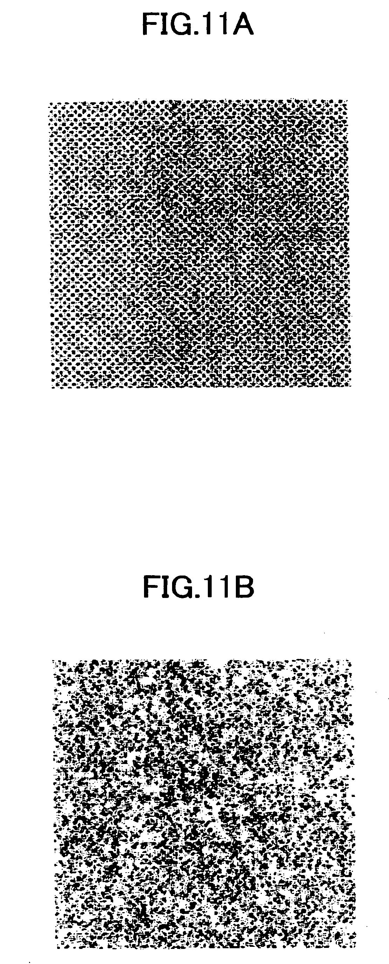

When the dither matrix having the frequency characteristic according to the embodiment of the present invention is used to reproduce a dot document, moire hardly occurs on the reproduced image shown in FIG. 11B if the dot document data shown in FIG. 11A is subjected to the dither processing, showing that the image quality of the document is remarkably improved compared with the quality of the reproduced image shown in FIG. 7B.

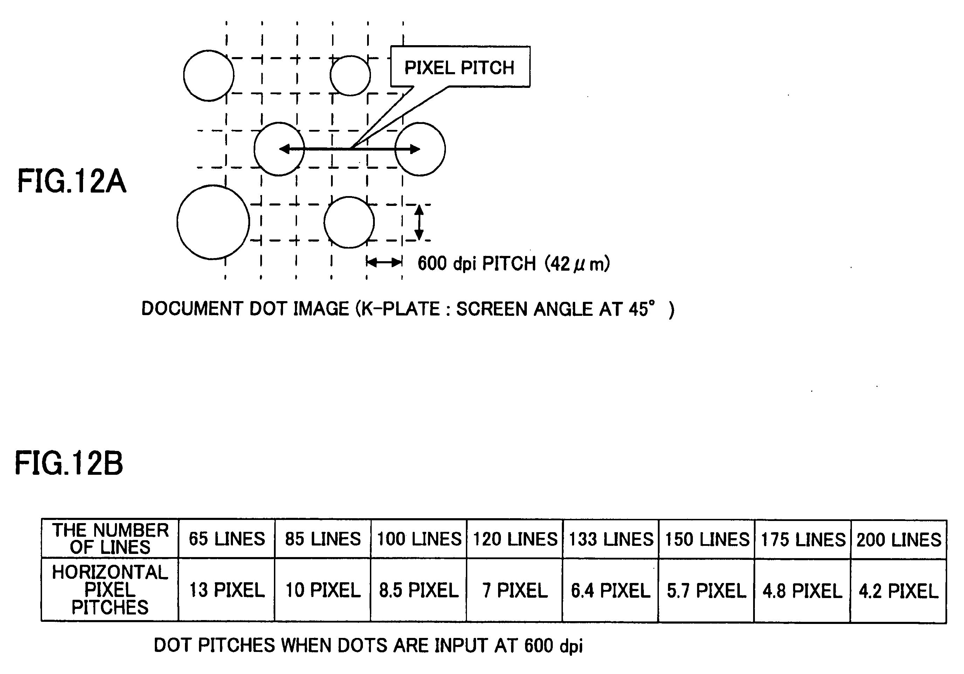

Referring now to FIGS. 12A and 12B and the subsequent figures, a description is made of an example of a specific configuration of the dither matrix according to the embodiment of the present invention.

As described above, the dither processing necessarily causes synchronism/asynchronism with document image data according to the threshold arrangement of a dither matrix. The problem resides in a document where dots are constantly arranged in the fixed period as shown in FIGS. 12A and 12B. Note that FIG. 12A schematically shows pixel pitches in a document dot image (input at 600 dpi) (K-plate: screen angle at 45°), and FIG. 12B shows horizontal pixel pitches (dot pitches when dots are input at 600 dpi) relative to the number of lines.

As apparent from FIGS. 12A and 12B, although the pitches between dots are different from each other depending on the number of lines, the dots are constantly arranged at a predetermined interval based on a square. The tones of images can be expressed as the size of a dot is increased. Since the generation coordinates of a dot are fixed with regularity, even a slight shift will cause the occurrence of interference moire if a dither matrix has a threshold arrangement with regularity. In the worst case, a total asynchronism with document image data will be caused. As a result, dots may not be reproduced at all.

In order to solve the problem, it is required to have the threshold arrangement including the part that necessarily synchronizes with a dot document and the threshold arrangement in which synchronism/asynchronism parts have no periodicity. The dither matrix according to the embodiment of the present invention solves this problem with randomness. However, the dither matrix with simple randomness causes dots to be overconcentrated, resulting in a noisy tone reproduction pattern.

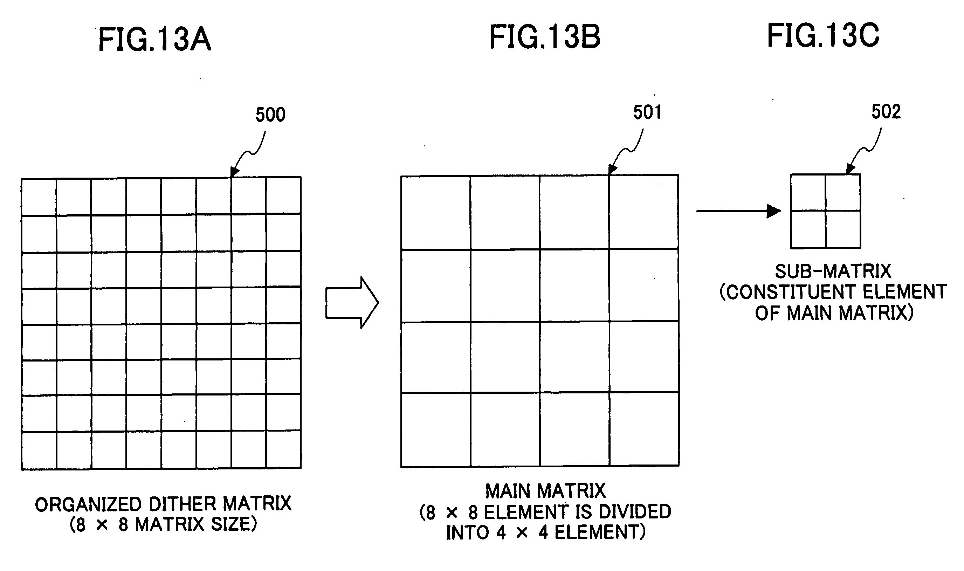

Thus, in the dither matrix according to the embodiment of the present invention, the organized dither matrix 500 shown in FIG. 13A is composed of the main matrices 501 shown in FIG. 13B and the sub-matrices 502 shown in FIG. 13 C constituting each part of the main matrices 501 so that the dither matrix can have dispersibility in a large sense and randomness in a local sense. Thresholds are arranged in the main matrices 501 based on the rule of the dispersed dither and randomly arranged in the sub-matrices 502.

In this manner, the dither matrix is configured to be an organized dither matrix composed of the main matrices having dispersibility and the sub-matrices having randomness, so that the above-described frequency characteristic can be easily obtained.

In this case, the regularity of Bayer dither or that of other dispersed dithers may be applied to the main matrices 502. However, since a dot document is based on a square dot arrangement, it is preferable that the dispersed dither as a reference for regularity be also based on the square threshold arrangement for easy synchronization. Therefore, the Bayer dither is preferable in this respect. Furthermore, if the sub-matrices 502 are larger in size than the main matrices 501, the randomness will become superior to the dispersibility. Therefore, it is required to make the size of the main matrices 501 larger than that of the sub-matrices 502.

Although thresholds are randomly assigned to the sub-matrices 502, complete randomness may cause dots to be overconcentrated to reduce image quality. This is because dots may be overconcentrated not only in one sub-matrix 502, but also between the adjacent sub-matrices 502. In the above-described related art, the random dither is switched to avoid the generation of texture. However, it does not assume the overconcentration of dots caused by the combination of the sub-matrices 502 and does not solve it as a matter of course.

In order to prevent the overconcentration of dots between the sub-matrices 502, that is, in order to prevent the overconcentration of dots straddling over the sub-matrices 502, a threshold is assigned based on a generation rate by circumferentially assigned (e.g., eight circumferential) thresholds in accordance with tone density. However, as described in the comparison with the dither matrix having the blue noise characteristic, the overdispersion of dots is not preferable as is the case with the concentration of dots. This is because the density of dots for reproducing document dots existing as a cluster is reduced. As a result, the concentration of an output image will be reduced.

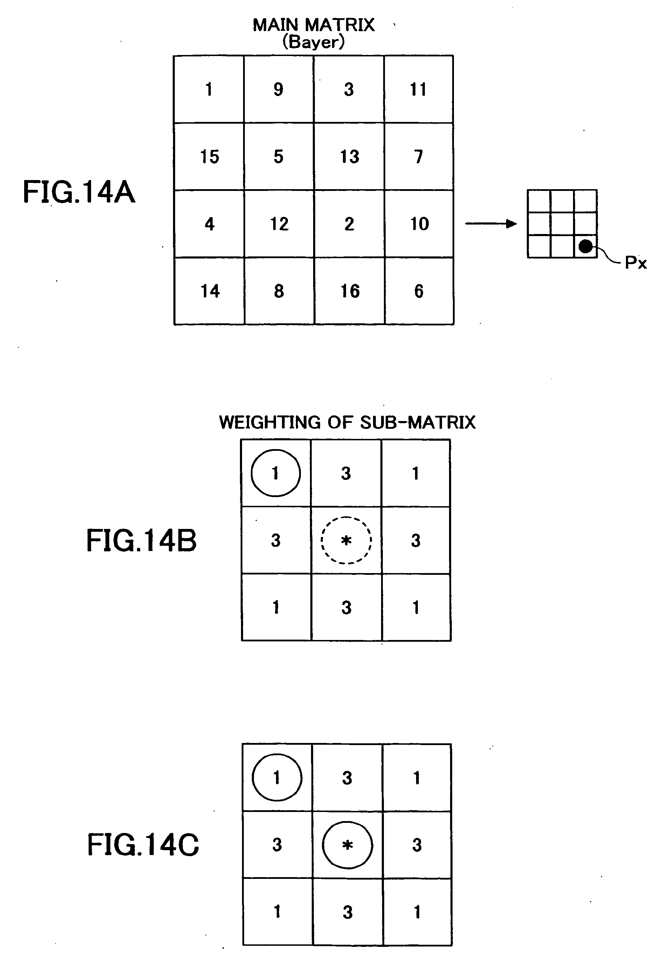

More specifically, where, for example, the 3 x 3 sub-matrix 502 is arranged in the individual Bayer main matrix 501, when a threshold is assigned to an arbitrary point Px in the 3 x 3 block, the threshold as to whether a dot is caused to be generated at the position of Px (the matrix attached with the mark *) as shown in FIG. 14B is determined by performing weighting at eight adjacent matrix positions (e.g., the matrices in the diagonal position are weighted by "1" and those in the left, right, top, and bottom positions are weighted by "3"). Based on the sum of the weighting at the position where the threshold has been assigned (the left upper matrix in FIG. 14B), if a generation rate by circumferentially assigned thresholds is a given rate proportional to the tone or smaller, the dot will be generated (in this example, the dot is generated, because the sum of the weighting is "1").

In this case, the generation rate by circumferentially assigned thresholds can be adjustable. For example, when the 50% tone matrix is selected, the maximum of the weighting by the circumferential matrices is "16" (1 x 4 + 3 x 4) in the above example. Therefore, if thresholds to make thin dots be generated are to be assigned, it is required to select matrices whose weighting sum is "eight or smaller" on average. In this case, however, the matrices where thresholds are assigned are limited. Accordingly, it is possible to allow a certain degree, e.g., three out of ten to assign thresholds to the matrices whose weighting sum is "10 or smaller."

In this manner, the sub-matrix is configured in such a manner that the thresholds are assigned based on the generation rate by the circumferentially assigned thresholds in accordance with tone density. In other words, the sub-matrix is designed to have a constant prohibited-rule arrangement (in which the generation rate by the circumferentially assigned thresholds should be at a predetermined rate or smaller) while having randomness. Thereby, it is possible to prevent the overconcentration of dots between the sub-matrices and easily achieve the above-described frequency characteristic.

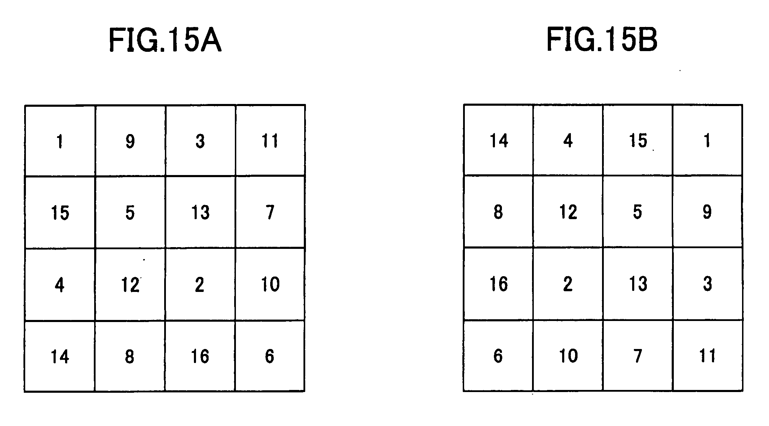

When halftone processing is performed using the dither matrix thus configured according to the embodiment of the present invention, the dither matrix may use a mask common to each plate of CMYK where an image is to be output. However, the dots after having been subjected to the dither processing are likely to be overlapped with each other in the plates of CMYK, which could possibly generate color muddiness and reduce granular feeling. Therefore, it is preferable to use a different mask for each color of the plates. For example, as shown in FIGS. 15A and 15B, the arrangement order of the main matrix 501 is changed (here, the matrix of FIG. 15A is rotated by 90° to obtain the matrix of FIG. 15B), to thereby make it possible to greatly differentiate the generation order of dots for each color.

Particularly, since a print document has an inherent screen angle for each color of CMYK, the main matrix 501 is rotated in accordance with the screen angle so that the reproducibility of dots can be further enhanced for each color.

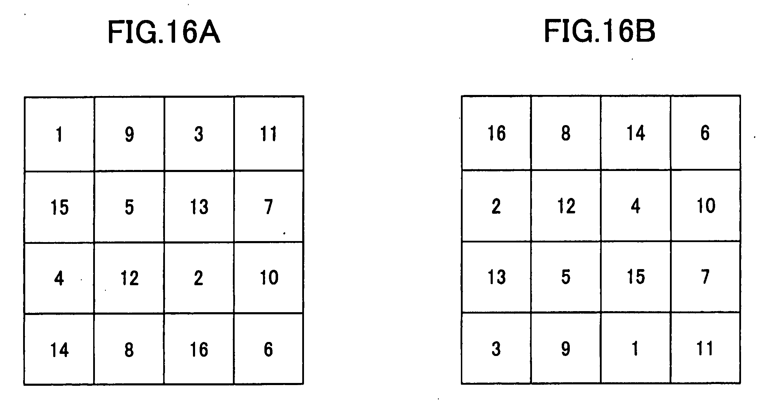

Furthermore, as shown in FIGS. 16A and 16B, the normally-ordered matrix shown in FIG. 16A is combined with the reversely-ordered matrix shown in FIG. 16B in which thresholds are reversely assigned, for each color, whereby the overlapping of each color of dots can be reduced. Particularly, it is preferable to reverse the order of C and M, the most sensitive to human eyes, or that of Y and K, sensitive to color muddiness.

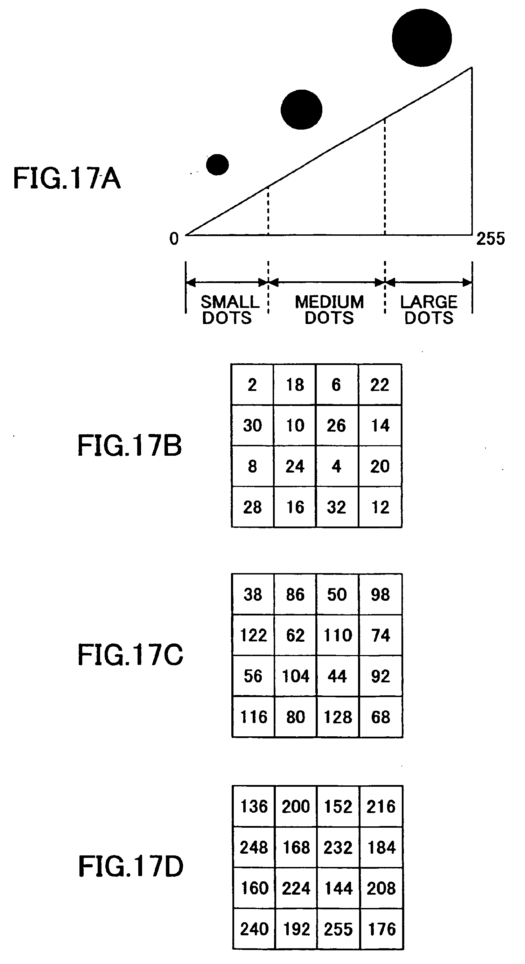

Moreover, when the dither matrix according to the embodiment of the present invention is applied to a multi-valued dither, it is possible to set a reproduction tone section in accordance with the size of a droplet (or the density of ink to be used) as shown in FIG. 17A and generate a multi-valued dither matrix for small dots, medium dots, and large dots to which values for each tone section are assigned, as shown in FIGS. 17B, 17C, and 17D.

Furthermore, some liquid-ejection-type image forming apparatuses have nozzles at high density to perform recording at high quality. Among the apparatuses, there is one that has nozzles arranged therein in color symmetry to perform bi-directional recording, thereby solving bi-directional color difference and aiming for high-speed printing. The symmetrical arrangement here refers to a configuration in which plural nozzle arrays composed of plural nozzles arranged in the sub-scanning direction are arranged in the main scanning direction, two or more nozzle arrays that eject the same color of ink are provided, one or more nozzle arrays that eject a different color of ink are provided between the nozzle arrays that eject the same color of ink, and nozzle arrays that eject the same color of ink are symmetrically arranged about an axis orthogonal to the main scanning direction.

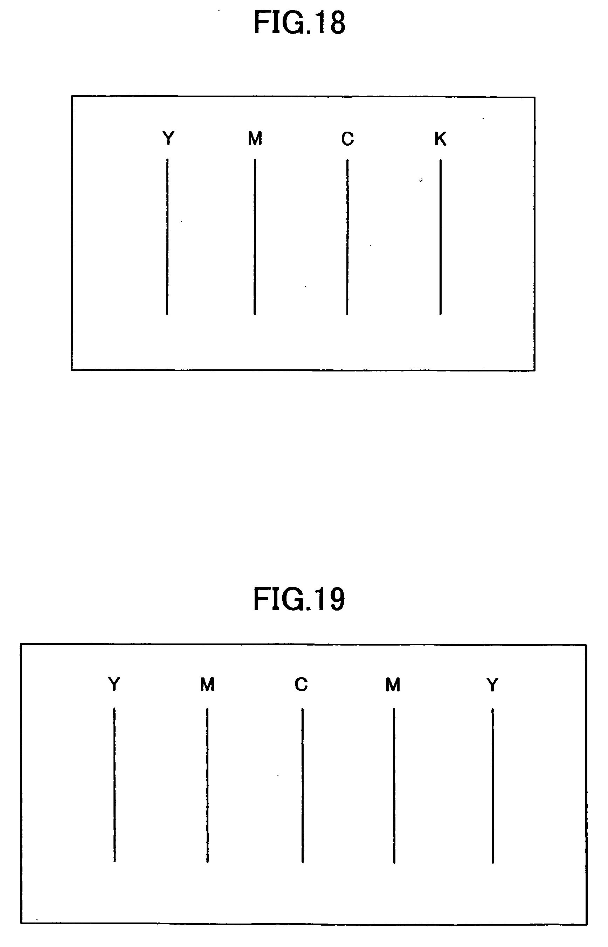

For example, when a head in which nozzle arrays of each color are respectively arranged in the printing direction (e.g., a head in which nozzle arrays are arranged in the order of YMCK) is used to perform bi-directional printing, bi-directional color difference is caused to occur at a part where plural recording liquids are overlapped with each other. In ejecting recording liquids of yellow and cyan so that they are overlapped with each other, color tones are made different depending on which of the orders, yellow → cyan, cyan → yellow, the recording liquids will be ejected. When the recording head in which the nozzles of each color are respectively arranged as shown in FIG. 18 is used to perform bi-directional printing, droplets will be ejected in the order of yellow → cyan for the forward direction and in the order of cyan → yellow for the backward direction, thereby causing stripe color unevenness having a different color tone.

In order to solve the problem, it is required to employ a configuration in which plural nozzle arrays composed of plural nozzles arranged in the sub-scanning direction are arranged in the main scanning direction, two or more nozzle arrays that eject the same color of ink are provided, and one or more nozzle arrays that eject a different color of ink are provided between the nozzle arrays that eject the same color of ink.

For example, as shown in FIG. 19, it is possible to eject the recording liquids so that they are overlapped with each other in the orders of C → Y as well as Y → C regardless of the forward and backward directions with the configuration in which the nozzle arrays that eject ink of C and M are arranged between the nozzle array that ejects ink of Y. Furthermore, it is possible to eject the recording liquids so that they are overlapped with each other in the orders of M → Y as well as Y → M regardless of the forward and backward directions. Thereby, it is possible to perform bi-directional printing while increasing a color reproduction area and print out color printed matter having a large color reproduction area at high speed.

Furthermore, it is possible to employ a configuration in which plural nozzle arrays composed of plural nozzles arranged in the sub-scanning direction are arranged in the main scanning direction, two or more nozzle arrays that eject the same color of ink are provided, one or more nozzle arrays that eject a different color of ink are provided between the nozzle arrays that eject the same color of ink, and nozzle arrays that eject the same color of ink are symmetrically arranged about an axis orthogonal to the main scanning direction.

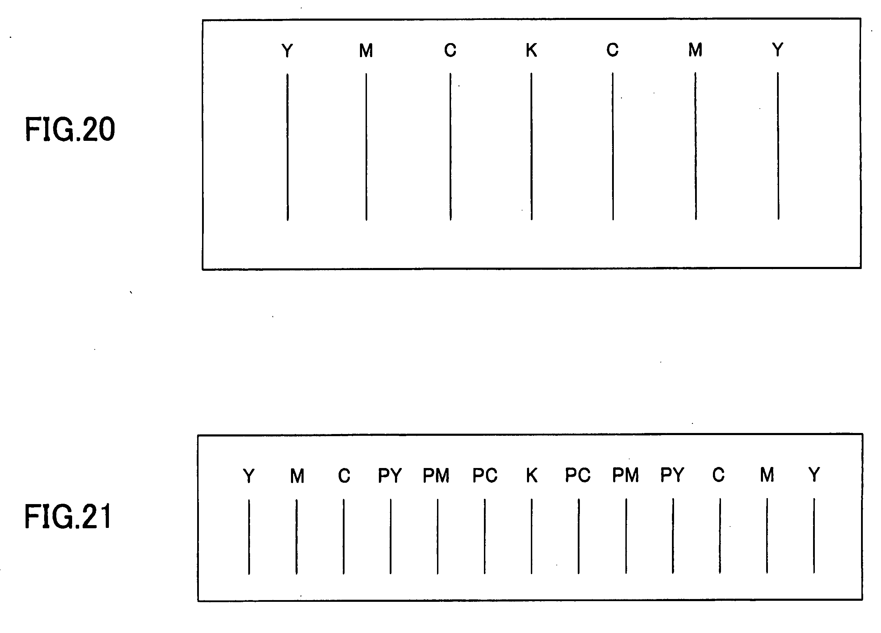

For example, as shown in FIG. 20, the nozzle arrays that eject the same color of ink are symmetrically arranged about an axis orthogonal to the main scanning direction, i.e., the nozzle arrays are arranged in the order of C, M, and Y centering on K, so that two or more colors of ink can be ejected so as to be overlapped with each other in an arbitrary overlapping order regardless of the forward and backward directions for more colors. Thereby, it is possible to perform bi-directional printing while obtaining a further increased color reproduction area and print out color printed matter having a large color reproduction area at high speed.

Moreover, as shown in FIG. 21, ink of yellow, magenta, cyan, and black having a low color density, namely, ink of photo yellow (PY), photo magenta (PM), and photo cyan (PC) can be used, besides normal ink of yellow (Y), magenta (M), cyan (C), and black (K). Furthermore, ink of photo gray (PG) can also be used. The use of ink having a low color density makes it possible not only to increase a color reproduction area, but also print out color printed matter of which granular feeling is reduced.

The image forming apparatus having such high density nozzles and symmetrical nozzle arrangement will have an increased calculation workload because it is required to process high density data at high speed. However, the halftone processing using the dither matrix according to the embodiment of the present invention makes it possible to reduce the calculation workload, ensure a processing speed, and achieve high resolution.

Furthermore, the dither processing using the dither matrix according to the embodiment of the present invention can be not only installed as hardware, but also incorporated into a printer driver as a program, e.g., as halftone processing for a printer mode as described above. Accordingly, the calculation workload can be reduced. Particularly, a computer can be more quickly released from a print task when the dither processing is applied not only to the processing of the image forming apparatus having the copy mode as described in the embodiment, but also to the image forming apparatus that prints and outputs the image data from the host. Moreover, it can also be applied to an information processing apparatus that outputs print data to the image forming apparatus (the information processing apparatus here also refers to the image processing apparatus according to the embodiment of the present invention).

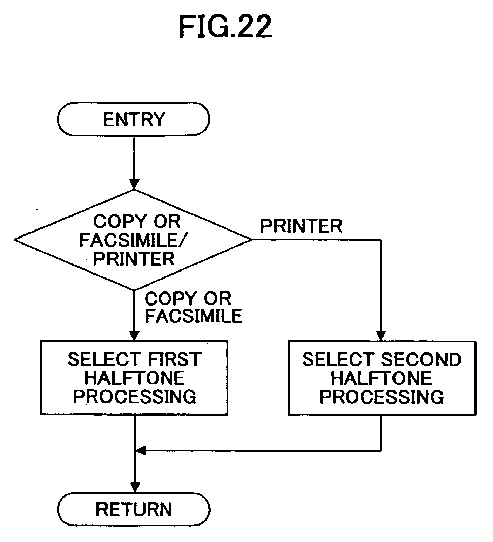

Furthermore, it is also possible to switch the halftone processing using the dither matrix according to the embodiment of the present invention from halftone processing using a different dither matrix. That is, there is halftone processing enabling a higher quality output with respect to continuous tone document images, although it is inferior in reduction of moire for dot document images and calculation workload. For example, as shown in FIG. 22, the halftone processing (first halftone processing) using the dither matrix according to the embodiment of the present invention is selected for a copy mode (and a facsimile mode) in which use frequency of a dot document is high, while the other halftone processing (second halftone processing) is selected for a printer mode in which the continuous tone document is mainly used. Accordingly, it is possible to perform high-quality image reproduction. These processing can be switched automatically in response to the mode selection or in accordance with users' instructions.

Further, the present invention is not limited to the embodiment, but variations and modifications may be made without departing from the scope of the present invention.

## Claims

1. An image processing apparatus that performs halftone processing in which input multi-valued (M-value) tone image data are converted into lower-valued (N-value: M > N > 2) image data by using a dither matrix, wherein
the dither matrix is a matrix where an intensity of a frequency characteristic of an output image relatively increases from a low frequency component, through an intermediate frequency component, to a high frequency component;
the dither matrix is an organized dither matrix composed of a main matrix having dispersibility and sub-matrices having randomness; and
a threshold is assigned to each cell of the sub-matrices based on a generation rate by a circumferentially assigned threshold in accordance with tone density.

2. The image processing apparatus according to claim 1, wherein
the main matrix having dispersibility is a Bayer matrix.

3. The image processing apparatus according to claim 1, wherein
the halftone processing is performed using the dither matrix when input data contain a dot image and the halftone processing is performed using a different dither matrix when the input data do not contain a dot image.

4. A program that causes a computer to perform halftone processing in which input multi-valued (M-value) tone image data are converted into lower-valued (N-value: M > N > 2) image data using a dither matrix, the program causing the computer to perform the halftone processing using the dither matrix, wherein
an intensity of a frequency characteristic of an output image relatively increases from a low frequency component, through an intermediate frequency component, to a high frequency component;
the dither matrix is an organized dither matrix composed of a main matrix having dispersibility and sub-matrices having randomness; and
a threshold is assigned to each cell of the sub-matrices based on a generation rate by a circumferentially assigned threshold in accordance with tone density.

5. The program according to claim 4, wherein
the main matrix having dispersibility is a Bayer matrix.

6. The program according to claim 4, causing the halftone processing to be performed using the dither matrix when input data contain a dot image and the halftone processing to be performed using a different dither matrix when the input data do not contain a dot image.

7. An image forming method that performs halftone processing in which input multi-valued (M-value) tone image data are converted into lower-valued (N-value: M > N > 2) image data by using a dither matrix and that causes a liquid ejection head for ejecting liquid droplets to eject liquid droplets so as to form images, wherein
the halftone processing is performed using the dither matrix where an intensity of a frequency characteristic of an output image relatively increases from a low frequency component, through an intermediate frequency component, to a high frequency component;
the dither matrix is an organized dither matrix composed of a main matrix having dispersibility and sub-matrices having randomness; and
a threshold is assigned to each cell of the sub-matrices based on a generation rate by a circumferentially assigned threshold in accordance with tone density.

8. A dither matrix that converts input multi- valued (M-value) tone image data into lower-valued (N- value: M > N > 2) image data for use in the method of claim 7, wherein
the dither matrix is a matrix where an intensity of a frequency characteristic of an output image relatively increases from a low frequency component, through an intermediate frequency component, to a high frequency component;
the dither matrix is an organized dither matrix composed of a main matrix having dispersibility and sub-matrices having randomness; and
a threshold is assigned to each cell of the sub-matrices based on a generation rate by a circumferentially assigned threshold in accordance with tone density.

## Patentansprüche

1. Bildverarbeitungsvorrichtung, die eine Halbtonverarbeitung ausführt, in der eingegebene mehrwertige (M-Wert-) Tonbilddaten unter Verwendung einer Dither-Matrix in geringerwertige (N-Wert: M > N > 2) Bilddaten umgesetzt werden, wobei
die Dither-Matrix eine Matrix ist, in der sich eine Stärke einer Frequenzcharakteristik eines Ausgabebildes von einer Niederfrequenzkomponente über eine Zwischenfrequenzkomponente zu einer Hochfrequenzkomponente relativ erhöht;
die Dither-Matrix eine gegliederte Dither-Matrix ist, die aus einer Hauptmatrix mit Dispersionsvermögen und Untermatrizen mit Zufälligkeit besteht; und
jeder Zelle der Untermatrizen gemäß einer Erzeugungsrate durch einen ringsum in Übereinstimmung mit der Tondichte zugeordneten Grenzwert ein Grenzwert zugeordnet wird.

2. Bildverarbeitungsvorrichtung nach Anspruch 1, wobei
die Hauptmatrix mit dem Dispersionsvermögen eine Bayer-Matrix ist.

3. Bildverarbeitungsvorrichtung nach Anspruch 1, wobei
die Halbtonverarbeitung unter Verwendung einer Dither-Matrix ausgeführt wird, wenn die Eingabedaten ein Punktbild enthalten, und die Halbtonverarbeitung unter Verwendung einer anderen Dither-Matrix ausgeführt wird, wenn die Eingabedaten kein Punktbild enthalten.

4. Programm, das bewirkt, dass ein Computer eine Halbtonverarbeitung ausführt, in der eingegebene mehrwertige (M-Wert-) Tonbilddaten unter Verwendung einer Dither-Matrix in geringerwertige (N-Wert: M > N > 2) Bilddaten umgesetzt werden, wobei das Programm bewirkt, dass der Computer die Halbtonverarbeitung unter Verwendung der Dither-Matrix ausführt, wobei
eine Stärke einer Frequenzcharakteristik eines Ausgabebildes sich von einer Niederfrequenzkomponente über eine Zwischenfrequenzkomponente zu einer Hochfrequenzkomponente relativ erhöht;
die Dither-Matrix eine gegliederte Dither-Matrix ist, die aus einer Hauptmatrix mit Dispersionsvermögen und Untermatrizen mit Zufälligkeit besteht; und
jeder Zelle der Untermatrizen gemäß einer Erzeugungsrate durch einen ringsum in Übereinstimmung mit der Tondichte zugeordneten Grenzwert ein Grenzwert zugeordnet wird.

5. Programm nach Anspruch 4, wobei die Hauptmatrix mit Dispersionsvermögen eine Bayer-Matrix ist.

6. Programm nach Anspruch 4, das bewirkt, dass die Halbtonverarbeitung unter Verwendung einer Dither-Matrix ausgeführt wird, wenn die Eingabedaten ein Punktbild enthalten, und die Halbtonverarbeitung unter Verwendung einer anderen Dither-Matrix ausgeführt wird, wenn die Eingabedaten kein Punktbild enthalten.

7. Bilderzeugungsverfahren, das eine Halbtonverarbeitung ausführt, in der eingegebene mehrwertige (M-Wert) Tonbilddaten unter Verwendung einer Dither-Matrix in geringerwertige (N-Wert: M > N > 2) Bilddaten umgesetzt werden, und das bewirkt, dass ein Flüssigkeitsausstoßkopf zum Ausstoßen von Flüssigkeitströpfchen Flüssigkeitströpfchen ausstößt, um Bilder zu erzeugen, wobei
die Halbtonverarbeitung unter Verwendung der Dither-Matrix ausgeführt wird, wobei sich eine Stärke einer Frequenzcharakteristik eines Ausgabebildes von einer Niederfrequenzkomponente über eine Zwischenfrequenzkomponente zu einer Hochfrequenzkomponente relativ erhöht;
die Dither-Matrix eine gegliederte Dither-Matrix ist, die aus einer Hauptmatrix mit Dispersionsvermögen und Untermatrizen mit Zufälligkeit besteht; und
jeder Zelle der Untermatrizen gemäß einer Erzeugungsrate durch einen ringsum in Übereinstimmung mit der Tondichte zugeordneten Grenzwert ein Grenzwert zugeordnet wird.

8. Dither-Matrix, die eingegebene mehrwertige (M-Wert) Tonbilddaten in geringerwertige (N-Wert: M > N > 2) Bilddaten umsetzt, für die Verwendung in dem Verfahren nach Anspruch 7, wobei
die Dither-Matrix eine Matrix ist, in der sich eine Stärke einer Frequenzcharakteristik eines Ausgabebildes von einer Niederfrequenzkomponente über eine Zwischenfrequenzkomponente zu einer Hochfrequenzkomponente relativ erhöht;
die Dither-Matrix eine gegliederte Dither-Matrix ist, die aus einer Hauptmatrix mit Dispersionsvermögen und Untermatrizen mit Zufälligkeit besteht; und
jeder Zelle der Untermatrizen gemäß einer Erzeugungsrate durch einen ringsum in Übereinstimmung mit der Tondichte zugeordneten Grenzwert ein Grenzwert zugeordnet wird.

## Revendications

1. Appareil de traitement d'image qui effectue un traitement de demi-teinte dans lequel des données d'image de teinte à multiples valeurs (M valeurs) d'entrée sont converties en des données d'image de plus faibles valeurs (N valeurs : M > N > 2) en utilisant une matrice de tramage, dans lequel
la matrice de tramage est une matrice où une intensité d'une caractéristique fréquentielle d'une image de sortie augmente de manière relative d'une composante basse fréquence, par l'intermédiaire d'une composante de fréquence intermédiaire, jusqu'à une composante haute fréquence ;
la matrice de tramage est une matrice de tramage organisée composée d'une matrice principale présentant une dispersibilité et de matrices secondaires présentant un caractère aléatoire ; et
un seuil est attribué à chaque cellule des matrices secondaires sur la base d'un taux de génération par un seuil attribué circonférentiellement conformément à une densité de teinte.

2. Appareil de traitement d'image selon la revendication 1, dans lequel
la matrice principale présentant une dispersibilité est une matrice de Bayer.

3. Appareil de traitement d'image selon la revendication 1, dans lequel
le traitement de demi-teinte est effectué en utilisant la matrice de tramage lorsque les données d'entrée contiennent une image de points et le traitement de demi-teinte est effectué en utilisant une matrice de tramage différente lorsque les données d'entrée ne contiennent pas une image de points.

4. Programme qui amène un ordinateur à effectuer un traitement de demi-teinte dans lequel des données d'image de teinte à multiples valeurs (M valeurs) d'entrée sont converties en des données d'image de plus faibles valeurs (N valeurs : M > N > 2) en utilisant une matrice de tramage, le programme amenant l'ordinateur à effectuer le traitement de demi-teinte en utilisant la matrice de tramage, dans lequel
une intensité d'une caractéristique fréquentielle d'une image de sortie augmente de manière relative d'une composante basse fréquence, par l'intermédiaire d'une composante de fréquence intermédiaire, jusqu'à une composante haute fréquence ;
la matrice de tramage est une matrice de tramage organisée composée d'une matrice principale présentant une dispersibilité et de matrices secondaires présentant un caractère aléatoire ; et
un seuil est attribué à chaque cellule des matrices secondaires sur la base d'un taux de génération par un seuil attribué circonférentiellement conformément à une densité de teinte.

5. Programme selon la revendication 4, dans lequel
la matrice principale présentant une dispersibilité est une matrice de Bayer.

6. Programme selon la revendication 4, provoquant l'exécution du traitement de demi-teinte en utilisant la matrice de tramage lorsque des données d'entrée contiennent une image de points et l'exécution du traitement de demi-teinte en utilisant une matrice de tramage différente lorsque les données d'entrée ne contiennent pas une image de points.

7. Procédé de formation d'image qui effectue un traitement de demi-teinte dans lequel des données d'image de teinte à multiples valeurs (M valeurs) d'entrée sont converties en des données d'image de plus faibles valeurs (N valeurs : M > N > 2) en utilisant une matrice de tramage et qui amène une tête d'éjection de liquide pour éjecter des gouttelettes de liquide à éjecter des gouttelettes de liquide de manière à former des images, dans lequel
le traitement de demi-teinte est effectué en utilisant la matrice de tramage où une intensité d'une caractéristique fréquentielle d'une image de sortie augmente de manière relative d'une composante basse fréquence, par l'intermédiaire d'une composante de fréquence intermédiaire, jusqu'à une composante haute fréquence ;
la matrice de tramage est une matrice de tramage organisée composée d'une matrice principale présentant une dispersibilité et de matrices secondaires présentant un caractère aléatoire ; et
un seuil est attribué à chaque cellule des matrices secondaires sur la base d'un taux de génération par un seuil attribué circonférentiellement conformément à une densité de teinte.

8. Matrice de tramage qui convertit des données d'image de teinte à multiples valeurs (M valeurs) d'entrée en des données d'image de plus faibles valeurs (N valeurs : M > N > 2) pour une utilisation dans le procédé de la revendication 7, dans lequel
la matrice de tramage est une matrice où une intensité d'une caractéristique fréquentielle d'une image de sortie augmente de manière relative d'une composante basse fréquence, par l'intermédiaire d'une composante de fréquence intermédiaire, jusqu'à une composante haute fréquence ;
la matrice de tramage est une matrice de tramage organisée composée d'une matrice principale présentant une dispersibilité et de matrices secondaires présentant un caractère aléatoire ; et
un seuil est attribué à chaque cellule des matrices secondaires sur la base d'un taux de génération par un seuil attribué circonférentiellement conformément à une densité de teinte.
